# EUROPEAN PATENT APPLICATION

(11) **EP 3 756 975 A1**
(43) Date of publication of application: **30.12.2020**
(21) Application number: 19183011.6
(22) Date of filing: 27.06.2019
(51) Int. Cl.: B62D 5/02, B62D 5/04, B62D 15/02

(54) **METHOD AND SYSTEM TO DETECT A HANDS ON WHEEL CONDITION IN A VEHICLE PROVIDED WITH AN ADVANCED DRIVING ASSISTANCE SYSTEM**

(71) Applicant: Visteon Global Technologies, Inc., Van Buren Township, MI 48111-5711 (US)
(72) Inventor: KNOP, Michael William, 76137 Karlsruhe (DE); KOPFSTEDT, Thomas, 76227 Karlsruhe (DE); WILMER, Thorsten, 76646 Bruchsal (DE)
(74) Representative: MERH-IP Matias Erny Reichl Hoffmann Patentanwälte PartG mbB

(57) **Abstract**

A system and method for detecting a hands on wheel condition, in regard to a steering wheel, in a vehicle. The vehicle includes an Advanced Driving Assistance System (ADAS). The system and method includes a) applying, by an actuator, the steering wheel with a frequency, F, and an amplitude, V; b) detecting, by a sensor, the frequency response of the steering wheel; and c) analyzing, by a processor, the frequency response of the steering wheel to determine the hands on wheel condition. Functionality of the ADAS may be tailored based on the hands on wheel condition.

## Description

### TECHNICAL FIELD

One or more embodiments described herein relate to a method for detecting a hands on wheel condition in a vehicle comprising a steering wheel assembly including a steering wheel connected to a steering rod, the vehicle being provided with an Advanced Driving Assistance System (ADAS). Furthermore, one or more embodiments described herein relate to a system for detecting a hands on wheel condition in a vehicle comprising a steering wheel assembly including a steering wheel connected to a steering rod, the vehicle being provided with an Advanced Driving Assistance System (ADAS).

### BACKGROUND

An Advanced Driving Assistance System (ADAS) may assist a driver of a vehicle in the driving process or even to takeover control of the vehicle. The ADAS may analyze a surrounding of the vehicle to determine functionality to assist the driver. This may include analyzing weather and/or road conditions in the surrounding, relative to the vehicle. For example, the ADAS may detect sudden changes in weather conditions, such as a sudden drop in temperature causing ice to form, heavy rain shower, bad road surface or traffic conditions, such as a traffic jam, road works, and/or a reduced range of vision, for example, during fog or glaring sun light. Based on this analysis, the ADAS may determine functionality to assist the driver.

### BRIEF SUMMARY OF THE INVENTION

One or more embodiments describe a method for detecting a hands on wheel condition in a vehicle. The vehicle includes a steering wheel assembly, which may include a steering wheel connected to a steering rod and/or a controller. The steering rod may be attached to a steering system of the vehicle, such as via a mechanical linkage. The controller may be in a wired connection or a wireless connection with the steering system of the vehicle. The rotation of the steering rod, by virtue of the rotation of the steering wheel, may cause the steering system to turn one or more wheels of the vehicle. Commands from the controller, by virtue of rotation of the steering wheel, may cause a motor or a pump of the steering system to turn one or more wheels of the vehicle. The vehicle includes an Advanced Driving Assistance System (ADAS).

According to an aspect, the method comprises a step of a) applying, by an actuator, the steering wheel with a frequency F and an amplitude V.

The terms frequency and amplitude may be interpreted as the steering wheel crossing its neutral position and having a certain degree of deflection to the left and to the right.

According to an aspect, the method further comprises a step of b) detecting, by a sensor, the frequency response of the steering wheel.

The term frequency response may be interpreted as the frequency F and the amplitude V that are actually detected by the sensor after the steering wheel has been applied with the frequency F and the amplitude V by the actuator.

According to an aspect, the method further comprises a step of c) analyzing, by a processor, the frequency response of the steering wheel to determine a hands on wheel condition.

Analysis may be performed by the processor based on respective signal processing algorithms in view of the frequency response detected by the sensor.

According to an aspect, the frequency F may be in a range of from 50Hz to 40kHz.

According to an aspect, the amplitude V may be lower than an amplitude V the vehicle would react to via the steering wheel.

According to an aspect, analyzing the frequency response may be based on determining an amount by which the frequency F and amplitude V are damped.

Part of the energy introduced to the steering wheel by the actuator may be absorbed by a body of a driver when touching the steering wheel. In this, the frequency F and the amplitude V detected by the sensor may be damped.

According to an aspect, a hands on wheel condition may be determined based on comparing the determined amount by which the frequency F and the amplitude V are damped to one or more threshold values.

The way in which a driver touches the steering wheel of a vehicle during the driving process may change depending on the current situation from lightly to firmly grabbing the steering wheel or even not grabbing the steering wheel at all. Assuming that the body of the driver absorbs a part of the energy introduced by the actuator when applying the steering wheel with the frequency F and the amplitude V, the amount of energy absorbed, and hence the amount by which the frequency F and the amplitude V are damped, may be correlated to one or more thresholds relating to conditions such as stated above, e.g. the driver lightly, firmly or even not all grabbing the steering wheel, i.e. hands on wheel conditions.

According to an aspect, the method may further comprise the step of d) executing one or more pre-set tasks by the ADAS in response to the determined hands on wheel condition.

The one or more pre-set tasks may be directed to assist the driver in the driving process or taking over control of the vehicle by the ADAS. The one or more pre-set tasks may encompass measures such as issuing a warning to the driver, correcting a position of the steering wheel, reducing speed of the vehicle or initiating braking of the vehicle.

One or more embodiments further describe a system for detecting a hands on wheel condition in a vehicle comprising a steering wheel assembly including a steering wheel connected to a steering rod, the vehicle being provided with an Advanced Driving Assistance System (ADAS).

According to an aspect, the system comprises a) an actuator configured to apply the steering wheel with a frequency F and an amplitude V.

In this, regardless of the type and implementation of the actuator, the steering wheel may be applied with a frequency F and amplitude V that may be regarded as being decoupled from any other frequencies and amplitudes the steering wheel may adopt during a driving process.

According to an aspect, the system further comprises b) a sensor configured to detect a frequency response of the steering wheel.

According to an aspect, the system further comprises c) a processor configured to analyze the frequency response to determine a hands on wheel condition.

As the frequency response of the steering wheel with regard to the frequency F and the amplitude V applied by the actuator may overlap with frequencies and amplitudes otherwise being adopted by the steering wheel during the driving process, the processor may be configured to apply one or more filters during the analysis of the frequency response to isolate the respective desired frequency response for a more accurate analysis. Alternatively, or additionally, the sensor may also be implemented as such that only the frequency response of the steering wheel with regard to the frequency F and the amplitude V applied by the actuator is detected.

According to an aspect, the processor may be implemented in the sensor.

According to an aspect, the ADAS may comprise an electronic control unit, ECU, and the processor may be implemented in the ECU.

According to an aspect, the actuator and the sensor may be integrated into one unit, the unit being connected to the steering rod.

According to an aspect, the actuator may be configured to apply the steering wheel with the frequency F and the amplitude V by rotating the steering rod.

According to an aspect, the sensor may be configured to detect the frequency response by detecting a current angular position of the steering wheel.

The sensor may further be configured to detect the angular position of the steering wheel as a function of time. In this, the degree of deflection of the steering wheel to the left and to the right may be determined as the amplitude V together with the steering wheel crossing its neutral position as the frequency F to detect the frequency response of the steering wheel.

According to an aspect, the actuator may be implemented as a motor controlling the steering wheel.

According to an aspect, the actuator may be a speaker coil connected to the steering rod or to the steering wheel.

According to an aspect, the ADAS may be configured to execute one or more pre-set tasks in response to the determined hands on wheel condition.

One or more embodiments may include analyzing a condition of a driver, such as whether the driver has his/her hands on a steering wheel, to determine functionality for assisting the driver. This may be in addition to or alternative to analyzing a surrounding of the vehicle. Moreover, this may be in addition to or alternative to analyzing an operational state and/or performance of another component, such as an image sensor directed at the surrounding, and/or another system, such as an imaging system for analyzing the surrounding, of the vehicle.

The functionality available for assisting the driver may, therefore, depend on the condition of the driver. For example, when the driver has his/her hands on the steering wheel, the ADAS may afford a first set of functionality for assisting the driver. When the driver does not have his/her hands on the steering wheel, the ADAS may afford a second set of functionality for assisting the driver. The first set may not be identical to the second set. For example, some functionality may be made unavailable in the first set, because of the condition of the driver. Similarly, some otherfunctionality may be made unavailable in the second set, because of the condition of the driver. There may, however, be an overlap between the first set and the second set in regard to functionality. The first set and/or the second set may be further tailored, such as narrowed, based on additional information, such as from analyzing the surrounding and/or analyzing the operational state and/or performance state of another component or system of the vehicle.

### BRIEF DESCRIPTION OF THE DRAWINGS

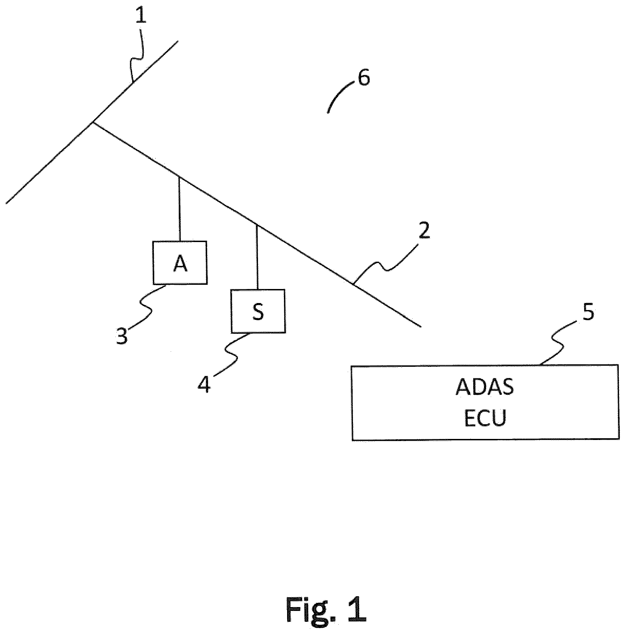

Fig. 1 is a schematic view of an embodiment of a system for detecting a hands on wheel condition in a vehicle comprising a steering wheel assembly including a steering wheel connected to a steering rod, wherein the vehicle is provided with an Advanced Driving Assistance System (ADAS).

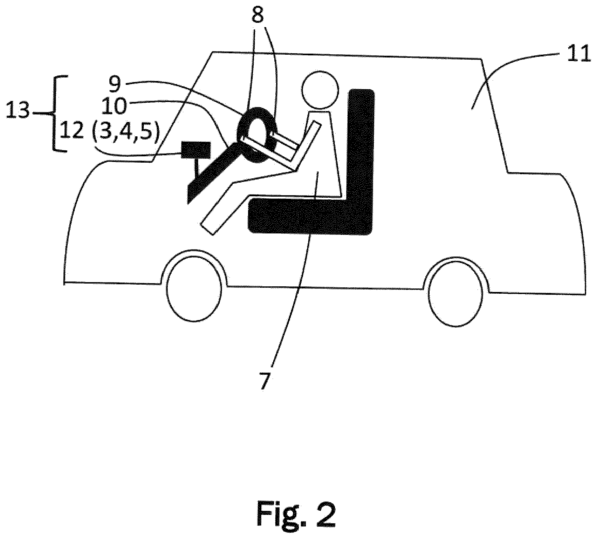

Fig. 2 is a schematic view of an embodiment of a system for detecting a hands on wheel condition in a vehicle comprising a steering wheel assembly including a steering wheel connected to a steering rod, wherein the vehicle is provided with an Advanced Driving Assistance System (ADAS), and wherein a driver is grabbing the steering wheel.

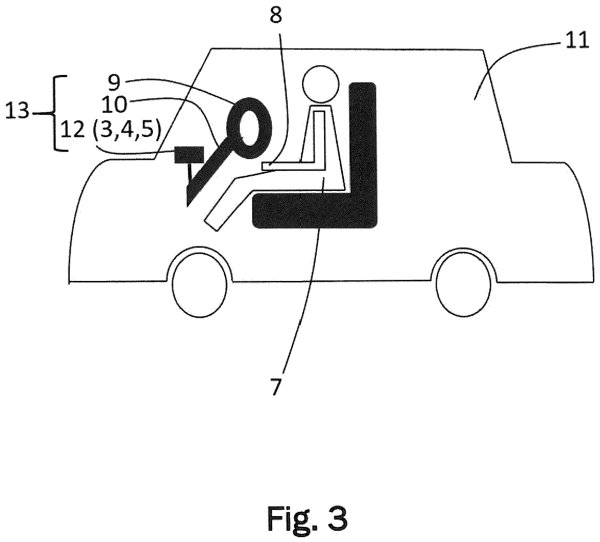

Fig. 3 is a schematic view of an embodiment of a system for detecting a hands on wheel condition in a vehicle comprising a steering wheel assembly including a steering wheel connected to a steering rod, wherein the vehicle is provided with an Advanced Driving Assistance System (ADAS), and wherein a driver is not grabbing the steering wheel.

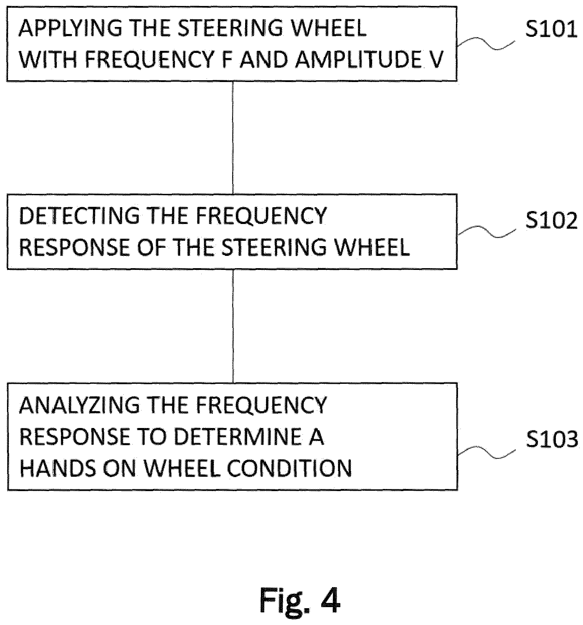

Fig. 4 shows a process flow schematically illustrating an embodiment of a method for detecting a hands on wheel condition in a vehicle comprising a steering wheel assembly including a steering wheel connected to a steering rod, wherein the vehicle is provided with an Advanced Driving Assistance System (ADAS).

### DETAILED DESCRIPTION OF THE INVENTION

Fig. 1 illustrates a schematic view of an embodiment of a system for detecting a hands on wheel condition in a vehicle comprising a steering wheel assembly including a steering wheel connected to a steering rod, the vehicle being provided with an Advanced Driving Assistance System (ADAS).

The system 6 illustrated in Figure 1 comprises an actuator (A) 3, a sensor (S) 4 and a processor 5. In the embodiment of Figure 1, the processor 5 is implemented in an electronic control unit (ECU) of the ADAS. In one embodiment, the processor 5 may, however, be implemented in the sensor 4.

In the embodiment of the system 6 in Figure 1, the actuator 3 is connected to the steering rod 2. While the implementation of the actuator 3 is not limited, in one embodiment, the actuator 3 may be implemented as a motor controlling the steering wheel 1. In another embodiment, the actuator 3 may be a speaker coil connected to the steering rod 2 or to the steering wheel 1.

While in the embodiment of Figure 1 the actuator 3 and the sensor 4 are illustrated as being individually connected to the steering rod 2, in one embodiment, the actuator 3 and the sensor 4 may be integrated into one unit, wherein the unit may be connected to the steering rod 2. In this, the actuator 3 and the sensor 4 may be integrated into a same box.

The actuator 3 is configured to apply the steering wheel 1 with a frequency F and an amplitude V. In one embodiment, the actuator 3 may be configured to apply the steering wheel 1 with the frequency F and the amplitude V by rotating the steering rod 2. The steering wheel 1 is connected to the steering rod 2.

The frequency F applied by the actuator 3 is only limited as to the capability of the sensor 4 to detect the frequency F. The frequency F may cover a range from a very low to a very high frequency. In one embodiment, the frequency F may be in the range of from 50Hz to 40kHz. However, also frequency ranges of from 100Hz to 20kHz and of from 500Hz to 5kHz are conceivable.

The amplitude V applied by the actuator 3 is only limited in so far as being high enough for the sensor 4 to detect it and low enough for the vehicle not to react to it via the steering wheel 1.

Referring again to the embodiment of the system 6 in Figure 1, once the steering wheel 1 has been applied with the frequency F and the amplitude V, the sensor 4 is configured to detect a frequency response of the steering wheel 1. A frequency response may be the current frequency F and amplitude V of the steering wheel 1. While the sensor 4 may be configured to detect the frequency response in any conceivable way, in one embodiment, the sensor 4 may be configured to detect the frequency response by detecting a current angular position of the steering wheel 1. The sensor may further be configured to detect the angular position of the steering wheel 1 as a function of time.

Once the frequency response of the steering wheel 1 has been detected by the sensor 4, the processor 5 is configured to analyze the frequency response to determine a hands on wheel condition. Analyzing the frequency response may be performed by any conceivable method used for signal processing with regard to changes in frequency and amplitude of a signal.

In one embodiment, analyzing the frequency response may be based on analyzing an amount by which the frequency F and amplitude V are damped. A damping of the frequency F and the amplitude V may result from a driver grabbing the steering wheel 1. In this, the body of the driver may absorb at least a part of the energy introduced by the actuator 3.

In one embodiment, a hands on wheel condition may be determined based on comparing the determined amount by which the frequency F and amplitude V are damped to one or more threshold values. The amount of energy absorbed may depend on the way the driver is grabbing (touching) the steering wheel 1. For example, a driver may only lightly grab the steering wheel 1, for example with only one hand, or firmly grab the steering wheel 1. A driver may also not grab the steering wheel 1 at all. If a driver is, for example, not grabbing the steering wheel 1, no damping (or only damping due to the steering wheel itself) of the frequency F and the amplitude V may be determined. This case may be taken as a threshold. The threshold may thus relate to the condition of the driver not grabbing the steering wheel 1, i.e. having hands off the steering wheel 1 as one of a hands on wheel condition. If an amount of damping higher than this threshold is determined by the analysis of the frequency response, this may indicate that the driver grabs the steering wheel 1, i.e. a further hands on wheel condition may be determined.

If a driver, for example, is lightly grabbing the steering wheel 1, a certain amount of damping of the frequency F and the amplitude V may be determined which may be lower than an amount in case the driver is firmly grabbing the steering wheel 1. These two cases may be taken as further threshold values. Additionally, or alternatively, the case of the driver firmly grabbing the steering wheel and the case of the driver not grabbing the steering wheel may define upper and lower threshold values based on which a hands on wheel condition may be determined.

To refine the determination of a hands on wheel condition, more threshold values may be defined. Even a respective damping function may be conceivable.

The one or more threshold values may be pre-determined and stored in the processor 5 for comparison with the current amount by which the frequency F and amplitude V are damped to determine a hands on wheel condition based on the comparison.

Figure 2 illustrates a schematic view of an embodiment of a system for detecting a hands on wheel condition in a vehicle comprising a steering wheel assembly including a steering wheel connected to a steering rod, wherein the vehicle is provided with an Advanced Driving Assistance System (ADAS), and wherein a driver is grabbing the steering wheel. In the embodiment of the system 13 in Figure 2, the driver 7 of the vehicle 11 is grabbing the steering wheel 9 of the steering wheel assembly with both hands 8 which may be an example for firmly grabbing the steering wheel 9 as stated above. If the driver 7 is firmly grabbing the steering wheel 9, the amount by which the frequency F and the amplitude V applied by the actuator 3 are damped may be high as compared, for example, to a case of the driver 7 lightly grabbing the steering wheel 9. In the embodiment of the system 13 in Figure 2, the actuator 3 and the sensor 4 are integrated into one unit 12, i.e. into the same box 12, wherein the box 12 is connected to the steering rod 10 of the steering wheel assembly. Further, in the embodiment of the system 13 in Figure 2, the processor 5 is implemented in the sensor 4.

Figure 3 illustrates a schematic view of an embodiment of a system for detecting a hands on wheel condition in a vehicle comprising a steering wheel assembly including a steering wheel connected to a steering rod, wherein the vehicle is provided with an Advanced Driving Assistance System (ADAS), and wherein a driver is not grabbing the steering wheel. Also in the embodiment of the system 13 in Figure 3, the actuator 3 and the sensor 4 are integrated into one unit 12, i.e. into the same box 12, wherein the box 12 is connected to the steering rod 10 of the steering wheel assembly. Further, in the embodiment of the system 13 in Figure 3, also the processor 5 is implemented in the sensor 4. In the embodiment of the system 13 in Figure 3, as compared to the embodiment illustrated in Figure 2, the driver 7 is not grabbing the steering wheel 9, thus the amount by which the frequency F and the amplitude V applied by the actuator 3 are damped may be lower, e.g. the frequency F and the amplitude V may only be damped by the steering wheel 9 itself. A determined hands on wheel condition may be utilized as information by the ADAS. In one embodiment, the ADAS may be configured to execute one or more pre-set tasks in response to the determined hands on wheel condition. The pre-set tasks may include one or more of communicating an information and/or a warning to the driver, correcting the angular position of the steering wheel 1, reducing the speed or initiating braking of the vehicle, and taking over control of the vehicle. In order to more accurately decide on a pre-set task to be executed, the ADAS may further be configured to cross-correlate the determined hands on wheel condition with data determined by other sensors implemented such as optical sensors, for example, cameras, acceleration sensors, LIDAR (light detection and ranging) and/or RADAR (radio detection and ranging) sensors.

Referring now to the embodiment of Figure 4, a process flow schematically illustrating a method for detecting a hands on wheel condition in a vehicle comprising a steering wheel assembly including a steering wheel connected to a steering rod, the vehicle being provided with an Advanced Driving Assistance System (ADAS), is shown.

In step S 101 of the method illustrated in Figure 4, the steering wheel of a vehicle provided with an Advanced Driving Assistance System (ADAS) is applied by an actuator with a frequency F and an amplitude V. In one embodiment, the actuator may apply the steering wheel with the frequency F and the amplitude V by rotating the steering rod to which the steering wheel is connected.

In step S 102, the frequency response of the steering wheel is detected by a sensor. A frequency response may be the current frequency F and amplitude V of the steering wheel. While the frequency response may be detected by the sensor in any conceivable way, in one embodiment, the frequency response may be detected by the sensor as a current angular position of the steering wheel. The angular position of the steering wheel may be detected as a function of time.

The frequency F applied by the actuator is only limited as to the capability of the sensor to detect the frequency F. The frequency F may cover a range from a very low to a very high frequency. In one embodiment, the frequency F may be in the range of from 50Hz to 40kHz. However, also frequency ranges of from 100Hz to 20kHz and of from 500Hz to 5kHz are conceivable.

The amplitude V applied by the actuator is only limited in so far as being high enough for the sensor to detect it and low enough for the vehicle not to react to it via the steering wheel.

In step S 103, the frequency response is analyzed by a processor to determine a hands on wheel condition. Analyzing the frequency response may be performed by any conceivable method used for signal processing with regard to changes in frequency and amplitude of a signal.

In one embodiment, analyzing the frequency response may be based on analyzing an amount by which the frequency F and amplitude V are damped. A damping of the frequency F and the amplitude V may result from a driver grabbing the steering wheel. In this, the body of the driver may absorb at least a part of the energy introduced by the actuator.

in one embodiment, a hands on wheel condition may be determined based on comparing the determined amount by which the frequency F and amplitude V are damped to one or more threshold values. The amount of energy absorbed may depend on the way the driver is grabbing (touching) the steering wheel. For example, a driver may only lightly grab the steering wheel, for example with only one hand, or firmly grab the steering wheel. A driver may also not grab the steering wheel at all. If a driver is, for example, not grabbing the steering wheel, no damping (or only damping due to the steering wheel itself) of the frequency F and the amplitude V may be determined. This case may be taken as a threshold. The threshold may thus relate to the condition of the driver not grabbing the steering wheel, i.e. having hands off the steering wheel as one of a hands on wheel condition. If an amount of damping higher than this threshold is determined based on the analysis of the frequency response, this may indicate that the driver grabs the steering wheel, i.e. a further hands on wheel condition may be determined.

If a driver, for example, is lightly grabbing the steering wheel, a certain amount of damping of the frequency F and the amplitude V may be determined which may be lower than an amount in case the driver is firmly grabbing the steering wheel. These two cases may be taken as further threshold values. Additionally, or alternatively, the case of the driver firmly grabbing the steering wheel and the case of the driver not grabbing the steering wheel may define upper and lower threshold values based on which a hands on wheel condition may be determined.

More threshold values may be taken to refine the determination of a hands on wheel condition. Even a respective damping function may be conceivable.

The one or more threshold values may be pre-determined and stored in the processor for comparison with the current determined amount by which the frequency F and amplitude V are damped to determine a hands on wheel condition based on the comparison.

The determined hands on wheel condition may be utilized as information by the ADAS. In one embodiment, the method may further comprise the step of the ADAS executing one or more pre-set tasks in response to the determined hands on wheel condition. The pre-set tasks may include one or more of communicating an information and/or a warning to the driver, correcting the angular position of the steering wheel, reducing the speed or initiating braking of the vehicle, and taking over control of the vehicle. In order to more accurately decide on a pre-set task to be executed, the ADAS may further cross-correlate the determined hands on wheel condition with data determined by other sensors implemented such as optical sensors, for example, cameras, acceleration sensors, LIDAR (light detection and ranging) and/or RADAR (radio detection and ranging) sensors.

The features described in herein can be relevant to one or more embodiments in any combination. The reference numerals in the claims have merely been introduced to facilitate reading of the claims. They are by no means meant to be limiting.

Throughout this specification various embodiments have been discussed. However, it should be understood that the invention is not limited to any one of these. It is therefore intended that the foregoing detailed description be regarded as illustrative rather than limiting.

## Claims

1. Method for detecting a hands (8) on wheel (1, 9) condition in a vehicle (11) comprising a steering wheel assembly including a steering wheel (1, 9) connected to a steering rod (2, 10), the vehicle (11) being provided with an Advanced Driving Assistance System (ADAS), the method comprising the steps of:
a) applying (S 101), by an actuator (3), the steering wheel (1, 9) with a frequency F and an amplitude V;
b) detecting (S 102), by a sensor (4), the frequency response of the steering wheel (1, 9); and
c) analyzing (S 103), by a processor (5), the frequency response of the steering wheel (1, 9) to determine a hands (8) on wheel (1, 9) condition.

2. Method according to claim 1, wherein the frequency F is in a range of from 50Hz to 40kHz.

3. Method according to claim 1 or 2, wherein the amplitude V is lower than an amplitude V the vehicle (11) would react to via the steering wheel (1, 9).

4. Method according to any of claims 1 to 3, wherein analyzing (S 103) the frequency response is based on determining an amount by which the frequency F and amplitude V are damped.

5. Method according to claim 4, wherein a hands (8) on wheel (1, 9) condition is determined based on comparing the determined amount by which the frequency F and the amplitude V are damped to one or more threshold values.

6. Method according to any of claims 1 to 5, wherein the method further comprises the step of d) executing one or more pre-set tasks by the ADAS in response to the determined hands (8) on wheel (1, 9) condition.

7. System (6, 13) for detecting a hands (8) on wheel (1, 9) condition in a vehicle (11) comprising a steering wheel assembly including a steering wheel (1, 9) connected to a steering rod (2, 10), the vehicle (11) being provided with an Advanced Driving Assistance System (ADAS), the system comprising:
a) an actuator (3) configured to apply the steering wheel (1, 9) with a frequency F and an amplitude V;
b) a sensor (4) configured to detect a frequency response of the steering wheel (1, 9); and
c) a processor (5) configured to analyze the frequency response to determine a hands (8) on wheel (1, 9) condition.

8. System (6, 13) according to claim 7, wherein the processor (5) is implemented in the sensor (4).

9. System (6, 13) according to claim 7, wherein the ADAS comprises an electronic control unit, ECU, and the processor (5) is implemented in the ECU.

10. System (6, 13) according to any of claims 7 to 9, wherein the actuator (3) and the sensor (4) are integrated into one unit (12), the unit being connected to the steering rod (2, 10).

11. System (6, 13) according to any of claims 7 to 10 wherein the actuator (3) is configured to apply the steering wheel (1, 9) with the frequency F and the amplitude V by rotating the steering rod (2, 10).

12. System (6, 13) according to claim 11, wherein the sensor (4) is configured to detect the frequency response by detecting a current angular position of the steering wheel (1, 9).

13. System (6, 13) according to any of claims 7 to 12, wherein the actuator (3) is implemented as a motor controlling the steering wheel (1, 9).

14. System (6, 13) according to any of claims 7 to 13, wherein the actuator (3) is a speaker coil connected to the steering rod (2, 10) or to the steering wheel (1, 9).

15. System (6, 13) according to any of claims 7 to 14, wherein the ADAS is configured to execute one or more pre-set tasks in response to the determined hands (8) on wheel (1, 9) condition.
